## Europäisches Patentamt
## European Patent Office
## Office européen des brevets

(19)

(11) Veröffentlichungsnummer: **0 239 087**
**B1**

(12)    # EUROPÄISCHE PATENTSCHRIFT

(45) Veröffentlichungstag der Patentschrift:
28.11.90

(51) Int. Cl.⁵: **C01G 37/027**

(21) Anmeldenummer: 87104378.2

(22) Anmeldetag: 25.03.87

(54)    **Verfahren zur Stabilisierung von nadelförmigem ferromagnetischem Chromdioxid.**

(30) Priorität: 27.03.86 DE 3610411

(43) Veröffentlichungstag der Anmeldung:
30.09.87 Patentblatt 87/40

(45) Bekanntmachung des Hinweises auf die Patenterteilung:
28.11.90 Patentblatt 90/48

(84) Benannte Vertragsstaaten:
DE FR GB NL

(56) Entgegenhaltungen:
DE-B- 2 152 331
GB-A- 1 435 392
GB-A- 1 573 857
US-A- 3 686 031
US-A- 4 244 932

(73) Patentinhaber: BASF Aktiengesellschaft,
Carl-Bosch-Strasse 38, D-6700 Ludwigshafen(DE)

(72) Erfinder: Rudolf, Peter Dr., Nibelungenweg 14,
D-6701 Maxdorf(DE)
Erfinder: Ohlinger, Manfred Dr.,
Anselm-Feuerbach-Strasse 13, D-6710 Frankenthal(DE)
Erfinder: Mueller, Norbert, Dr., Maximilianstrasse 23,
D-6701 Friedelsheim(DE)
Erfinder: Huebner, Werner, Hauptstrasse 48 c,
D-6710 Frankenthal(DE)

**Beschreibung**

Die Erfindung betrifft ein Verfahren zur Stabilisierung von nadelförmigem ferromagnetischem Chromdioxid.

Die Herstellung von nadelförmigem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise dem bei der Herstellung von magnetischen Aufzeichnungsträgern verwendeten organischen Polymerbindemitteln unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A 3 512 930 die Behandlung von Chromdioxid-Pulver mit einem Reduktionsmittel, während gemäß der DE-A 2 325 132 die Einwirkung von gasförmigen Reduktionsmitteln den Curie-Punkt erhöhen soll. Nach anderen Verfahren werden Aluminium-Überzüge (US-A 3 687 726) oder solche aus schwerlöslichen Metallphosphaten (US-A 3 686 031) erzeugt. Auch das Aufbringen von Metallverbindungen, deren Kationen zur Bildung schwerlöslicher Chromate befähigt sind, ist bereits bekannt (DE-B 2 152 331). Die JA-A 21 200/76 schlägt zur Umhüllung der Chromdioxid-Teilchen das oberflächliche Aufbringen magnetischer Eisenoxide vor, während gemäß der DE-A 2 749 757 Eisen-(III)-haltige oxidische Niederschläge auf das Chromdioxid aufgebracht werden.

Alle diese Verfahren verbessern die Stabilität des Chromdioxids dadurch, daß entweder auf der Teilchenoberfläche ein Niederschlag abgeschieden wird, der sowohl aus einer Fremdsubstanz als auch aus einem schwerlöslichen Chromat besteht kann, oder die Teilchenoberfläche reduktiv behandelt wird, wodurch auch als Oberflächenschicht eine stabile Verbindung des dreiwertigen Chroms entsteht. Trotz dieser Bemühungen die Stabilität des Chromdioxids zu gewährleisten und unter Beachtung der angebrachten Vorsichtsmaßnahmen bei der Verarbeitung zu magnetischen Aufzeichnungsträgern ist zu beobachten, daß die Stabilität der remanenten Magnetisierung dieser Aufzeichnungsträger nicht unbegrenzt ist. Wie umfangreiche Untersuchungen gezeigt haben, wird die Instabilität des Chromdioxid-Materials in einer Magnetschicht, insbesondere bei höheren Temperaturen vorwiegend durch die Feuchte der Umgebungsluft hervorgerufen. Durch den Angriff der Luftfeuchtigkeit wird das Chromdioxid in Umkehrung seiner Herstellreaktion in eine Chrom(III)oxid-haltige Verbindung und in Chromationen gespalten, wobei letztere die organischen Komponenten der Magnetschicht oxidativ angreifen unter Bildung weiterer Chrom(III)verbindungen. So wird die Stabilität des Chromdioxids in der Magnetschicht bei 40°C und 0 % rel. Feuchte kaum beeinflußt, die anfängliche Sättigungsmagnetisierung ist auch nach 4 Wochen noch zu nahezu 100 % erhalten und auch bei 65°C ist ohne die Anwesenheit von Luftfeuchte nur ein Rückgang um weniger als 10 % festzustellen. Erst eine hohe relative Feuchte, von z.B. 95 %, führt selbst bei stabilisiertem Chromdioxid zu einem drastischen Rückgang. Dies zeigt, daß eine Stabilisierung des Chromdioxids nach dem Stand der Technik dieses zwar verbessert, unter ungünstigen Bedingungen aber nicht ausreichend ist, um den Einfluß des Wasserdampfes zu verhindern.

Es bestand daher die Aufgabe, ein Verfahren zur Stabilisierung von Chromdioxid bereitzustellen, das die geschilderten Nachteile nicht aufweist und insbesondere ein Chromdioxid liefert das dadurch ausgezeichnet ist, daß die Chromdioxid-Teilchen mit einer homogenen Schutzschicht überzogen sind, welche Diffusion und Angriff von Wasser weitgehend unterbinden.

Es wurde nun gefunden, daß mit einem Verfahren zur Stabilisierung von Chromdioxid, das durch Umsetzung von Oxiden des 3- und 6-wertigen Chroms bei erhöhtem Druck und erhöhter Temperatur in Gegenwart von Wasser und Modifierungsmittel erhalten wurde, durch Behandlung des Chromdioxids mit einer Verbindung, welche sich mit den in dem Chromdioxid zurückbleibenden wasserlöslichen Chromverbindungen zu wasserunlöslichen Chromverbindungen umsetzt, die gestellte Aufgabe gelöst werden kann, wenn das Chromdioxid in wäßriger Suspension mit einer ionischen Verbindung, dessen Kation Zink, Blei und/oder Barium ist, und mindesten einem nichtreduktiven Tensid bei einem pH-Wert der Suspension von größer 4,5 behandelt, anschließend die Festsubstanz abfiltriert, gewaschen und getrocknet wird.

In einer besonderen Ausgestaltung des erfindungsgemäßen Verfahrens wird die wäßrige Suspension des Chromdioxids auf einen pH-Wert zwischen 4,5 und 13 eingestellt und eine Bariumhydroxid-Lösung und mindestens ein Tensid aus der Gruppe der perfluorierten Alkylsulfonate, der Polyoxyethylenphosphatester und der Organosilane zugesetzt.

Das für das erfindungsgemäße Verfahren eingesetzte Chromdioxid wird nach bekannten und allgemein üblichen Verfahren hergestellt, wie beispielsweise in der EP-B 27 640 beschrieben. Es kann gegebenenfalls zweckmäßig sein, dieses Chromdioxidmaterial zuvor einer thermischen und/oder mechanischen Behandlung zu unterwerfen, wie z.B. einer Trocken- oder Naßmahlung oder es auch mechanisch zu verdichten oder bereits vorzudispergieren.

Zur Durchführung des erfindungsgemäßen Verfahrens wird das Chromdioxid in Wasser durch z.B. kräftiges Rühren suspendiert. Dabei ist es zweckmäßig ein Verhältnis von 1 Teil Pulver auf mindestens 12 Teile Wasser einzuhalten. Diese Suspension wird nun durch Zugabe von Alkalien auf einen pH-Wert von größer 4,5, vorzugsweise auf 5 bis 7, eingestellt. Anschließend wird unter weiterem kräftigen Rühren, zweckmäßigerweise bei Raumtemperatur, eine wäßrige Lösung einer ionischen Verbindung, welche als Kation Zink, Blei und/oder Barium aufweist und gleichzeitig damit oder danach das Tensid als wäßrige Lösung oder Suspension zugegeben. Die Reihenfolge der Zugabe von ionischer Verbindung und Tensid ist wählbar. Die Mengen an ionischer Verbindung betragen 3 bis 30 Teile und die des Tensids 0,3 bis 3 Teile, bezogen auf 100 Teile Chromdioxid. Nach weiterem Rühren über einen an sich üblichen Zeitraum von bis zu einer Stunde wird der Feststoff abfiltriert, mit Wasser gewaschen und der feuchte Filterkuchen bei Raumtemperaturen unter 100°C, üblicherweise bei 70 bis 90°C, getrocknet.

Mit dem erfindungsgemäßen Verfahren ist ein stabilisiertes Chromdioxid erhältlich, dessen verbesserte homogene Schutzschicht das Chromdioxid-Teilchen gegen den zersetzenden Einfluß von Wasser weitgehend schützt. Diese Verbesserung der Eigenschaften des Chromdioxidmaterials wirkt sich insbesondere dann aus, wenn es zur Herstellung von magnetischen Aufzeichnungsträgern eingesetzt wird und in die organische Polymere enthaltende Magnetschicht eingebettet ist

Somit wurden die vorteilhaften Eigenschaften der gemäß der Erfindung hergestellten Chromdioxide bei der Verwendung als magnetisches Material zur Herstellung von magnetischen Aufzeichnungsträgern deutlich. Die Verarbeitung erfolgt nach bekannten Methoden. Für die Herstellung der Magnetschicht werden 20 bis 50 Gew.-Teile Chromdioxid mit einem Teil des Bindemittels bzw. -gemisches sowie den geeigneten Dispergierhilfsmittel, Gleitmitteln und weiteren üblichen Zusatzstoffen in einer Gesamtmenge bis zu 10 Gew.-% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten polierten Walzen unter Druck hindurchgeführt. Danach betragen die Dicken der Magnetschichten üblicherweise zwischen 1,5 und 12 μm.

Als Bindemittel für die Magnetschichten können die bekannten Polymerbindemittel verwendet werden, wie Vinylchlorid-Copolymere, Acrylat-Copolymere, Polyvinylacetate, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Festigkeit von 40 bis 42 N/mm² und eine Reißdehnung (nach DIN 53 455) von etwa 440 bis 560 %. Gut bewährt haben sich auch Polymerbindemittel auf der Basis eines Copolymerisates aus 70 bis 95 und insbesondere 75 bis 90 Gew.-%. Vinylchlorid und 5 bis 30 und insbesondere 10 bis 25 Gew.-% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew.-% Vinylachlorid, 5 bis 15 Gew.-% Dimethylmaleinat und 5 bis 15 Gew.-% Diethylmaleinat. Der K-Wert nach H. Fikentscher liegt für die besonders geeigneten Polymerbindemittel zwischen 40 und 60.

Die unter Verwendung der erfindungsgemäß hergestellten Chromdioxide gefertigten magnetischen Aufzeichnungsträger weisen gegenüber den bekannten Chromdioxid enthaltenden Aufzeichnungsträgern eine verbesserte Klimastabilität auf.

Anhand der folgenden Beispiele wird das erfindungsgemäße Verfahren näher erläutert und mit Vergleichsversuchen zum Stand der Technik in Beziehung gesetzt.

Beispiel A

In einen Reaktionsbecher mit einem Volumen von 4 l wurden 2,19 l Wasser vorgelegt. Dann wurden unter Rühren zunächst 5,68 kg Chromsäureanhydrid ($CrO_3$) zugegeben. Nach 10 Minuten wurden dazu 33 g Kaliumantimonyltartrat (0,38 Gew.-%, bezogen auf Chromdioxid) und 104 g nadelförmige -$Fe_2O_3$ (1,3 Gew.-%, bezogen auf Chromdioxid) zugegeben. Danach wurden unter ständigem Rühren 2,84 kg

3

Chrom(III)oxid eingetragen. Nach einer weiteren Rührzeit von 20 Minuten wurde der Reaktionsbecher in einen Autoklaven eingebraut und letzterer innerhalb von 15 Stunden auf 270°C aufgeheizt. Dabei baute sich ein Druck auf, der bei Anstieg auf 450 bar über ein Regelventil konstant gehalten wurde. Nach einem Temperatur-Druckzyklus von 270°C und 450 bar über 15 Stunden wurde der Reaktor innerhalb von 8 Stunden abgekühlt, entspannt und geöffnet. Das gebildete Chromdioxid wurde aus dem Reaktor mechanisch ausgeräumt und gemahlen.

An dem resultierenden Chromdioxid wurde die spezifische Oberfläche nach DIN 66 132 mit einem Ströhlein-Areameter nach dem Einpunkt-Differenzverfahren nach Haul und Dümbgen zu 27,5 m²/g bestimmt sowie die magnetischen Eigenschaften mittels eines Schwingmagnetometers in einem Meßfeld von 160 kA/m bei einer mittleren Stopfdichte von 1,15 g/cm³ gemessen und zwar die Koerzitivfeldstärke zu 49 kA/m, die spezifische remanente Magnetisierung zu 49 nTm³/g und die spezifische Magnetisierung zu 90 nTm³/g.

Beispiel 1

100 Teile eines gemäß Beispiel A hergestellten Chromdioxids wurden in 1200 Teile Wasser aufgeschlämmt und durch Zugabe von Natronlauge ein pH-Wert von etwa 6 eingestellt. Anschließend wurde mit einem Hochleistungsdispergator unter Kühlung etwa 10 Minuten bis zum Entstehen einer gleichmäßigen Suspension dispergiert. Jetzt wurden 2 Teile eines handelsüblichen Polyoxyethylen-phosphatesters in 50 Teile Wasser innerhalb von 3 Minuten zugesetzt und danach mit 13,8 Teile Ba(OH)₂ . 8 H₂O in 100 Teile Wasser versetzt und noch 30 Minuten nachgerührt. Zum Schluß wurde abfiltriert, wobei das Filtrat chromatfrei war, mit Wasser gewaschen und bei 70°C getrocknet.

Nun wurden in einer 1000 Volumenteile fassenden zylindrischen Stahlmühle, in welcher 1000 Teile Stahlkugeln mit einem Durchmesser zwischen 4 und 7 mm enthalten waren, 115 Teile eines gemäß Beispiel 1 hergestellten Chromdioxids, 2 Teile Zinkstearat, 1,5 Teile Sojalecithin, 3 Teile eines Gemisches flüssiger Fettsäuren mit einem Schmelzpunkt zwischen 50 und 59°C, 110 Teile eines Gemisches aus gleichen Teilen Tetrahydrofuran und 1,4-Dioxan sowie 200 Teilen einer 15 %igen Bindemittellösung, hergestellt durch Lösen von 19,5 Teilen eines elastomeren, thermoplastischen Polyurethans (erhalten gemäß DT-AS 11 06 959 aus Adipinsäure, 1,4 Butandiol und 4,4'-Diphenylisocyanatodiphenylmethan) und 10,5 Teilen eines Vinylchlorid-Polymerisats aus 80 Teilen Vinylchlorid, 10 Teilen Dimethylmaleinat in 170 Teilen eines Gemisches aus gleichen Teilen Tetrahydrofuran und 1,4-Dioxan eingebracht. Die Mischung wurde 5 Tage dispergiert, die erhaltene Dispersion unter Druck durch eine Glasfaser-Papier-Filterschicht filtriert und auf einer üblichen Beschichtungsmaschine mittels eines Linealgießers in einer solchen Dicke auf eine 12 μm dicke Polyethylenterephthalatfolie aufgebracht, daß sich nach dem Trocknen und Kalandrieren eine Trockenschichtdicke von 5,5 μm ergab. Unmittelbar nach dem Aufgießen der flüssigen Dispersion wurden die nadelförmigen Chromdioxidteilchen durch ein Magnetfeld längs der Aufzeichnungsrichtung orientiert.

Das resultierende Magnetband hatte eine Koerzitivfeldstärke von 50 kA/m, eine Sättigungsmagnetisierung von 195 mT und eine remanente Magnetisierung in Längsrichtung von 172 mT bei einem Richtfaktor von 3,1.

An dem magnetischen Aufzeichnungsträger wurde die Klimastabilität bei 65°C und 95 % relativer Feuchte bestimmt und zwar wurde hierzu unter diesen Bedingungen ein magnetischer Aufzeichnungsträger im Klimaschrank 1,2 und 3 Wochen gelagert und jeweils die Sättigungsmagnetisierung bei Raumtemperatur gemessen und in Prozent vom Anfangswert angegeben. Die Bestimmung der magnetischen Eigenschaften erfolgte mittels eines Schwingungsmagnetometers bei einem Meßfeld von 160 kA/m. Die Meßergebnisse sind in der Tabelle angegeben.

Beispiel 2

Es wurde wie in Beispiel 1 beschrieben verfahren, jedoch wurden zuerst 10 Teile Ba(OH)₂ . 8 H₂O in 50 Teile Wasser aufgeschlämmt und dann 1 Teil eines handelsüblichen fluorierten Alkylpolyoxyethylenethanol gelöst in Wasser zugesetzt. Die Meßerzeugnisse des Klimatests an dem resultierenden Aufzeichnungsträger sind in der Tabelle angegeben.

Beispiel 3

Es wurde wie in Beispiel 1 beschrieben verfahren, jedoch wurden als Tensid 1 Teil eines handelsüblichen Organosilan-Konzentrats eingesetzt. Die Meßergebnisse des Klimatests sind in der Tabelle angegeben.

Vergleichsversuch 1

Das gemäß Beispiel A hergestellte Chromdioxid wurde ohne zusätzliche Behandlung in der in Beispiel 1 beschriebenen Weise zu einem Magnetband verarbeitet. Die Meßergebnisse des Klimatests sind in der Tabelle angegeben.

## Vergleichsversuch 2

Das gemäß Beispiel A hergestellte Chromdioxid wurde in der zwölffachen Menge Wasser aufgeschlämmt, durch Zugabe von Natronlauge des pH-Wert auf 6 eingestellt und noch 1O Minuten intensiv dispergiert. Nach dem Abfiltrieren wurde mit der fünffachen Menge Wasser gewaschen und wie in Beispiel 1 beschrrieben ein Magnetband hergestellt und die Klimabeständigkeit bestimmt. Die Meßergebnisse sind in der Tabelle angegeben.

## Vergleichsversuch 3

Es wurde wie in Beispiel 1 beschrieben verfahren, jedoch wurde kein Tensid zugesetzt. Die Meßergebnisse sind in der Tabelle angegeben.

## Vergleichsversuch 4

Es wurde wie in Beispiel 2 beschrieben verfahren, jedoch ohne Zugabe des Bariumhydroxids. Die Meßergebnisse sind in der Tabelle angegeben.

## Vergleichsversuch 5

Es wurde wie in Beispiel 3 beschrieben verfahren, jedoch ohne Zugabe des Bariumhydroxids. Die Meßergebnisse sind in der Tabelle angegeben.

## Vergleichsversuch 6

Die Behandlung des gemäß Beispiel A hergestellten Chromdioxids wurde gemäß den Angaben in Beispiel 1 der DE-B 2 152 331 vorgenommen und zwar 1OO Teile des Chromdioxids in 1OOO Teilen Wasser aufgerührt. Danach wurde abfiltriert, der feuchte Filterkuchen in 5OO Teile Wasser aufgerührt und unter gründlichem Mischen 12O Teile einer 3 %igen Bariumchlorid-Lösung innerhalb von 2O Minuten zugegeben. Danach wurde abfiltriert und das Chromdioxid bei 7O°C getrocknet. Damit wurde nun, wie in Beispiel 1 beschrieben, ein Magnetband hergestellt und die Klimastabilität bestimmt. Die Meßergebnisse sind in der Tabelle angegeben.

## Vergleichsversuch 7

Es wurde wie im Vergleichsversuch 6 beschrieben verfahren, jedoch wurden nur 15 Teile der Bariumchlorid-Lösung zugesetzt. Die Meßergebnisse sind in der Tabelle angegeben.

## Tabelle

| | | Klimastabilität in % nach | | |
| --- | --- | --- | --- | --- |
| | | 1 | 2 | 3 Wochen |
| Beispiel 1 | | 84 | 78 | 76 |
| " 2 | | 86 | 79 | 75 |
| " 3 | | 83 | 76 | 73 |
| Vergleichsbeispiel 1 | | 75 | 64 | 60 |
| " | 2 | 75 | 65 | 61 |
| " | 3 | 77 | 70 | 66 |
| " | 4 | 76 | 66 | 62 |
| " | 5 | 72 | 62 | 59 |
| " | 6 | 77 | 67 | 59 |
| " | 7 | 73 | 64 | 60 |

**Patentansprüche**

1. Verfahren zur Stabilisierung eines durch die Umsetzung von Oxiden des 3wertigen und 6wertigen Chroms bei erhöhtem Druck und erhöhter Temperatur in Gegenwart von Wasser und Modifizierungsmittel erhaltenen nadelförmigen ferromagnetischen Chromdioxids durch Behandlung mit einer Verbindung, die sich mit den in dem Chromdioxid zurückbleibenden wasserlöslichen Chromverbindungen zu wasserunlöslichen Chromverbindungen umsetzt, Filtrieren, Waschen und Trocknen, wobei das Chromdioxid in einer wäßrigen Suspension mit einer ionischen Verbindung, deren Kation Zink, Blei und/oder Barium ist, und mindestens einem nichtreduktiven Tensid bei einem pH-Wert der Suspension von größer 4,5 behandelt wird.

2. Verfahren gemäß Anspruch 1, dadurch gekennzeichnet, daß die wäßrige Suspension auf einen pH-Wert zwischen 4,5 und 13 eingestellt und eine Bariumhydroxid-Lösung und mindestens ein Tensid aus der Gruppe der perfluorierten Alkylsulfonate, der Polyethylenphosphatester und der Organosilane zugesetzt wird.

**Claims**

1. A process for stabilizing an acicular ferromagnetic chromium dioxide obtained by reacting an oxide of trivalent or hexavalent chromium under superatmospheric pressure at elevated temperatures in the presence of water and a modifier by treatment with a compound which reacts with the water-soluble chromium compound remaining in the chromium dioxide to form a waterinsoluble chromium compound, filtration, washing and drying, in which the chromium dioxide in an aqueous suspension is treated with anionic compound whose cation is zinc, lead or barium, and one or more non-reductive surfactants, at a suspension pH of greater than 4.5.

2. A process as claimed in claim 1, wherein the aqueous suspension is brought to a pH of 4.5–13 and a barium hydroxide solution and one or more surfactants from the group consisting of the perfluorinated alkylsulfonates, the polyethylene phosphate esters and the organosilanes are added.

**Revendications**

1. Procédé de stabilisation d'un bioxyde de chrome ferromagnétique aciculaire, obtenu par la réaction d'oxydes de chrome trivalent et hexavalent, à pression élevée et température élevée, en présence d'eau et d'agent de modification, par traitement avec un composé qui, avec les composés de chrome solubles dans l'eau demeurant dans le bioxyde de chrome, se transforme en composés de chrome insolubles dans l'eau, filtration, lavage et séchage, le bioxyde de chrome étant traité, en suspension aqueuse, à un pH de la suspension supérieur à 4,5, avec un composé ionique, dont le cation et zinc, plomb et/ou baryum, et au moins un tensio-actif non réductif.

2. Procédé selon la revendication 1, caractérisé par le fait que la suspension aqueuse est réglée à un pH compris entre 4,5 et 13 et est additionnée d'une solution d'hydroxyde de baryum et d'au moins un tensioactif du groupe des alkylsulfonates perfluorés, des esters de polyéthylènephosphate et des organosilanes.